# EUROPEAN PATENT SPECIFICATION

(11) **EP 1 724 669 B1**
(45) Date of publication and mention of the grant of the patent: **26.11.2008**
(21) Application number: 05010099.9
(22) Date of filing: 10.05.2005
(51) Int. Cl.: G06F 3/06, G11B 19/02

(54) **Press key operating type optical disk duplicating system**
Duplikationsverfahren für optische Platten mittels Drucktaste
Commande de copie de disque optique par commutateur poussoir

(43) Date of publication of application: 22.11.2006
(73) Proprietor: Ho, Ming-Chiao, Jhonghe City, Taipei County (TW)
(72) Inventor: Ho, Ming-Chiao, Jhonghe City, Taipei County (TW)
(74) Representative: Haft, von Puttkamer, Berngruber

(56) References cited:
- EP-A- 1 050 795
- DEYES HIGH SCHOOL: "Microprocessor Control"[Online] 27 October 2004 (2004-10-27), XP002390450 Retrieved from the Internet: URL:http://web.archive.org/web/20041027130 835/http://www.deyes.sefton.sch.uk/technol ogy/AS&Alevel/microprocessor_control.htm> [retrieved on 2006-07-14]
- SATEIRA SOFTWARE: "DropToCD"[Online] 5 March 2005 (2005-03-05), XP002390451 Retrieved from the Internet: URL:http://web.archive.org/web/20050305223 237/www.sateira.com/dtc.php> [retrieved on 2006-07-14]
- WIKIPEDIA: "Terminate and Stay Resident"[Online] 23 March 2005 (2005-03-23), XP002390452 Retrieved from the Internet: URL:http://en.wikipedia.org/w/index.php?ti tle=Terminate_and_Stay_Resident&oldid=1596 2824> [retrieved on 2006-07-14]
- PATENT ABSTRACTS OF JAPAN vol. 2003, no. 12, 5 December 2003 (2003-12-05) -& JP 2004 147202 A (SHARP CORP), 20 May 2004 (2004-05-20)

## Description

### BACKGROUND OF THE INVENTION

### Field of the Invention

The present invention relates to an optical disk duplicating system, more particularly to an optical disk duplication system that utilizes press keys to control the duplicating operation of an optical disk burner.

### Description of the Related Art

Currently, optical disk burners sold in the market include special burners for duplicating CD-R/W or DVD-RW optical disks, burners installed inside personal computer as a built-in optical disk burner, and burners externally connected to personal computer as an external optical disk burners. After an optical disk burner is connected to a personal computer and a driver program is installed, users are still unable to use the optical disk burner to duplicate or burn (write to) an optical disk directly. Users still need to install a duplicating program in the personal computer before they can run the duplication function provided by the duplicating program in a personal computer to duplicate a file to an optical disk (to burn or write to an optical disk) inserted into the optical disk burner or duplicate a source optical disk inserted into the optical disk burner. For either one of the operations of duplicating a file in the personal computer or duplicating a source optical disk, a user needs to switch the control screen provided by the duplicating program and click an appropriate option to run the correct burning or duplicating operations. Such process not only is complicated and laborious, but also is a big problem for beginners or general users. Taking the most popular duplicating program Nero® for example, if a user wants to duplicate a file in the computer to an optical disk (burn an optical disk) or duplicate a source optical disk, the user needs to run the Nero duplicating program. After the program is run, the following options will appear on the screen of the computer monitor for users to click: "Function", "Data", "Sound Effect", "Digital Photo and Movie", "Copy and Backup" and "Program", etc. After a user clicks on "Function", the following options will further appear on the screen of the computer monitor: "Data CD", "Music CD", "VCD" and "Quick Copy", etc. After the user clicks on "Quick Copy", the screen of the monitor will show the following options: "Source CD", "Burner", "Option", "Write Speed", "No. of Copies", "Setup", "Saved Disk Track", "Erase", "CD Information", "Cover Design", "Maximum Speed", "Simulate" and "Write", etc, and so forth.

When a user clicks on an option, the computer monitor will show a screen of the next level, and the screen of each level further includes several options and each option has a corresponding icon, configuration and meaning. All these make those who are not familiar with the duplication program Nero very confused and totally lost. Therefore, many users have to spend much time and efforts to learn the operation of the Nero® program in order to execute the function of each option correctly. Since there are so many unfamiliar computer terms encountered in the learning process, therefore it takes lots of efforts and time to learn and causes frustrations easily. As a result, the willingness of using an optical disk burner to duplicate files or burn an optical disk becomes very low.

The EP 1050795 A2 discloses a method for copying a content compact disk within a computer system by using an optical disk burner coupled to the computer system and having one ore more copy buttons disposed thereon. By using the method , pressing one copy button a copy software is launched that evaluates the computer system to determine the number of CD drives available as well as the type and formatting of the inserted CDs, whereby based on this information the copy software prompts the user to take the appropriate steps to terminate the copy process, so that as a result the data are copied immediately. By using this method a lot of space on a CD may remain unused, since the data are copied after pressing a copy button.

From the description of Sateira Software "DropToCD"(Online) 5 March 2005, derived from web.archive.org/web/20050305223237/www.sateira.com/dtc.php a method of burning data on a CD is disclosed, which uses a drag & drop technique to a dedicated window in order to define the data to be copied immediately.

Therefore, it is an important objective to design an optical disk burner that can meet the user-friendly and easy-to-operate requirements, so that a user just needs to press a single function key disposed on the optical disk burner in order to drive the optical disk burner to duplicate a file to an optical disk (burn an optical disk) or duplicate an optical disk directly or use a simple, easy and user-friendly way to guide a user to burn or duplicate an optical disk through a personal computer quickly. The new design of the optical disk burner is similar to a fully automatic camera that only requires users to press the shutter to take a picture while aiming at a target object, and thus it can skip the preparation and adjusting operations of the traditional cameras including the settings of the diaphragm, shutter speed, and focal length. Therefore, the way of designing an optical disk burner is to allows a user to burn or duplicate an optical disk by just pressing a single function key and leaves all the complicated control operations to the optical disk burner and personal computer. Such design will become an important design model of optical disk burners as well as the optical disk burner industry in the future.

### SUMMARY OF THE INVENTION

In view of the foregoing shortcomings of the traditional optical disk burner encountered in the process of duplicating a file to an optical disk or duplicating an optical disk, the inventor of the present invention conducted extensive researches and experiments and finally invented a press key operating type optical disk duplicating system. The press key operating type optical disk duplicating system of the present invention comprises an optical disk burner, and the optical disk burner is connected to a personal computer for playing, burning (writing to), or duplicating an optical disk (such as a CD or a DVD) loaded into the optical disk burner . The optical disk burner comprises at least two function keys, and each function key is connected to a control circuit, so that when the function key is pressed to turn on the control circuit and the corresponding program installed in the personal computer, a series of operations required for burning or duplicating an optical disk are executed. A user just needs to press a single function key to successfully complete the burning of an optical disk or perform the duplication between a source optical disk and a blank optical disk in a simple and easy manner.

Therefore, the primary objective of the present invention is to add a control circuit having the capability of making logical determination to a traditional built-in or external optical disk drive. The control circuit comprises at least one General Purpose I/O (GPIO) port, and each GPIO port is connected to each function key, such that if the GPIO port detects a function key is pressed, then it will drive the corresponding software to produce an optical disk bucket icon to be shown on the screen of the personal computer and reside on the uppermost screen of the computer monitor. If a user wants to duplicate a file, the user just needs to click the file and drag it to the optical disk bucket icon.

Another objective of the present invention is to drive a corresponding software to show the messages such as "Please load a blank disk" or "Duplication completed" on the screen of a monitor to guide a user to quickly and successfully complete the file duplicating operation according to the instructions when the total number of files waiting for a duplication in the optical disk bucket icon reaches the maximum number for starting the file duplication, or the control circuit detects that another function key is pressed.

A further objective of the present invention is to drive a corresponding program to show the messages such as "Please load target disk", "Please remove target disk, and load blank disk", "Duplication completed" on the screen of a monitor to guide the user to quickly and successfully complete the optical disk duplicating operation according to the user-friendly instructions when the control circuit detects that another function key is pressed. Therefore, users no longer need to install and learn additional duplicating program or waste time and effort on the complicated duplicating operation to search for a way of completing the optical disk duplicating operation.

Another further objective of the present invention is to add a counter in the optical disk bucket icon or at a position next to the optical disk bucket icon for instantly showing the total amount of data sitting in the optical disk bucket by the counter, in addition to showing the optical disk bucket icon on the screen of the computer monitor.

The present invention, wich addresses the above objectives, is defined in appended independent claims 1 and 3.

The above objects, features and advantages of the present invention will become apparent from the following detailed description taken with the accompanying drawing. However, these drawings are provided for reference and illustration and not intended to act as a limitation to the present invention.

### BRIEF DESCRIPTION OF THE DRAWINGS

FIG. 1 is a perspective view of the press key operating type optical disk duplicating system according to the present invention.
FIG 2 is a block diagram showing the hardware architecture of the press key operating type optical disk duplicating system according to the present invention.
FIG 3 is a flow chart of the press key operating type optical disk duplicating system according to the present invention.
FIG 4 is another flow chart of the press key operating type optical disk duplicating system according to the present invention.

### DETAILED DESCRIPTION OF THE PREFERRED EMBODIMENTS

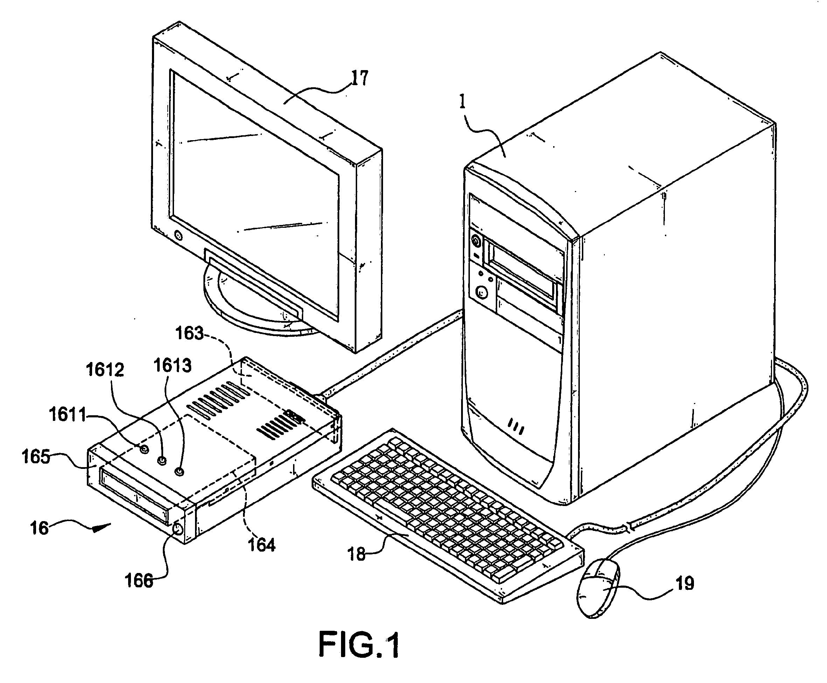

Please refer to FIG 1 for the press key operating type optical disk duplicating system for the present invention. The optical disk duplicating system comprises an optical disk burner 16, and the optical disk burner 16 is connected to a personal computer 1, It is not only capable of accessing the data on an optical disk (such as a CD or a DVD) that is loaded into the optical disk burner 16, but also capable of performing optical disk duplication or burning for an optical disk loaded into the optical disk burner 16. Please refer to FIG 1 for a preferred embodiment of the present invention. The optical disk burner 16 is an optical disk burner externally connected to the housing of a personal computer. However, the implementation of the present invention is not limited to the use of an external optical disk burner, but the optical disk burner 16 could also be a built-in optical disk burner installed inside the housing of a personal computer. The optical disk burner 16 comprises a housing and the housing comprises an optical disk mechanism 164. A front panel 165 is disposed at the front side of the housing and an optical disk eject switch 166 is disposed on the front panel 165 for pushing out or pulling in the optical disk mechanism 164 as to allow users to load or remove an optical disk. The housing further comprises at least two function keys 1611, 1612, 1613 thereon and a control circuit 163 therein, and the control circuit 163 comprises at least one general-purpose input/output port (GPIO port). Each GPIO port is connected separately to each function key 1611, 1612, 1613, such that if the function key 1611, 1612, 1613 is pressed, the control circuit 163 and the corresponding software installed in the personal computer 1 are turned on to execute a series of operations required for burning or duplicating an optical disk. Therefore, a user just needs to press a single function key 1611, 1612, 1613 as to successfully complete file duplication to an optical disk (burning an optical disk) or a duplicating operation between a source optical disk and a blank optical disk in a simple and user-friendly manner. In another preferred embodiment of the present invention, the function key 1611, 1612, 1613 must be installed on the front panel 165 to facilitate users to press the function key 1611, 1612, 1613 if the optical disk burner 16 is a built-in optical disk burner.

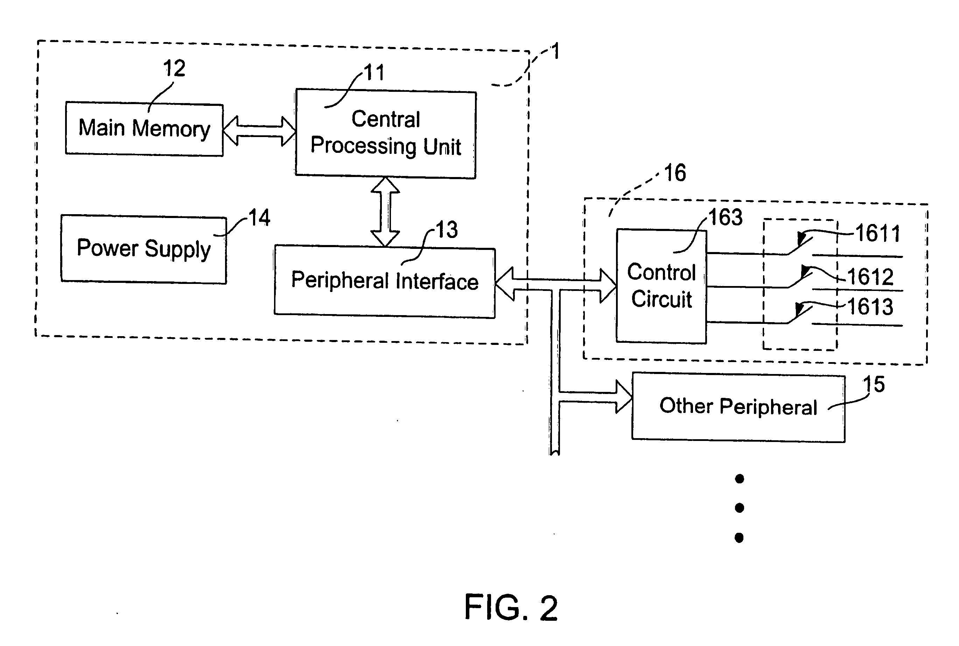

In the preferred embodiment as shown in FIGS. 1 and 2, the personal computer 1 comprises a central processing unit 11, a main memory 12, a plurality of peripheral interfaces 13, and a power supply 14, wherein the central processing unit 11 is used for controlling the normal operation of each electronic component in the personal computer 1, and the main memory 12 is connected to the central processing unit 11 for storing data or temporarily stored computing data, and each peripheral interface 13 is connected separately with the central processing unit 11 and the peripheral such as an optical disk burner 16, a monitor 17, a keyboard 18, a mouse 19 and other computer peripheral equipment 15 for acting as a conversion circuit among them. After a user connects the control circuit 163 of the optical disk burner 16 to a personal computer 1 through one of the peripheral interface 13 and installs a driver program of the optical disk burner 16 in the personal computer 1, the central processing unit 11 can control the optical disk burner 16 through the peripheral interface 13, and the optical disk burner 16 can also start the related software in the personal computer 1 through the peripheral interface 13 to execute a series of corresponding operations.

In this preferred embodiment, if a user wants to back up or duplicate files or data stored in the main memory 12 (or hard disk drive) to a blank optical disk installed into the optical disk burner 16, the user presses one of the configuration function keys 1611 to trigger the control circuit 163 to drive the corresponding software as to create an "environment for duplicating files by a simple operation" in the operating system of the personal computer 1 and produce an optical disk bucket icon on the screen of the monitor 17 such that the optical disk bucket icon resides at the uppermost level of the screen of the monitor 17. Therefore, if a user wants to duplicate a file, the user just needs to click on the desired file and drag it to the optical disk bucket. Until the total amount of files or data waiting in the optical disk bucket for a duplication is accumulated to a maximum number, or the control circuit 163 detects an optical disk burning function key 1612 is pressed, the corresponding software is driven to display a message such as "Please load a blank disk" or "Duplication completed" on the screen of a monitor to guide a user to quickly and successfully complete the file duplicating operation according to the instructions. While the optical disk bucket icon is generated on the screen of the monitor 17, this preferred embodiment could also add a counter in the optical disk bucket or at a position adjacent to the optical disk bucket for showing the total amount of data waiting for duplication in the optical disk bucket. Further, if a user wants to duplicate a source optical disk, the user can press an optical disk duplication function key 1613 to trigger the control circuit and drive the corresponding software to display the simple messages such as "Please load target disk", "Please remove target disk, and load blank disk", "Duplication completed" on the screen of a monitor to guide the user to quickly and successfully complete the optical disk duplicating operation according to the user-friendly instructions. Therefore, users no longer need to install and learn additional duplicating programs or waste time and effort on the complicated duplicating operation to search for a way of completing the optical disk duplicating operation.

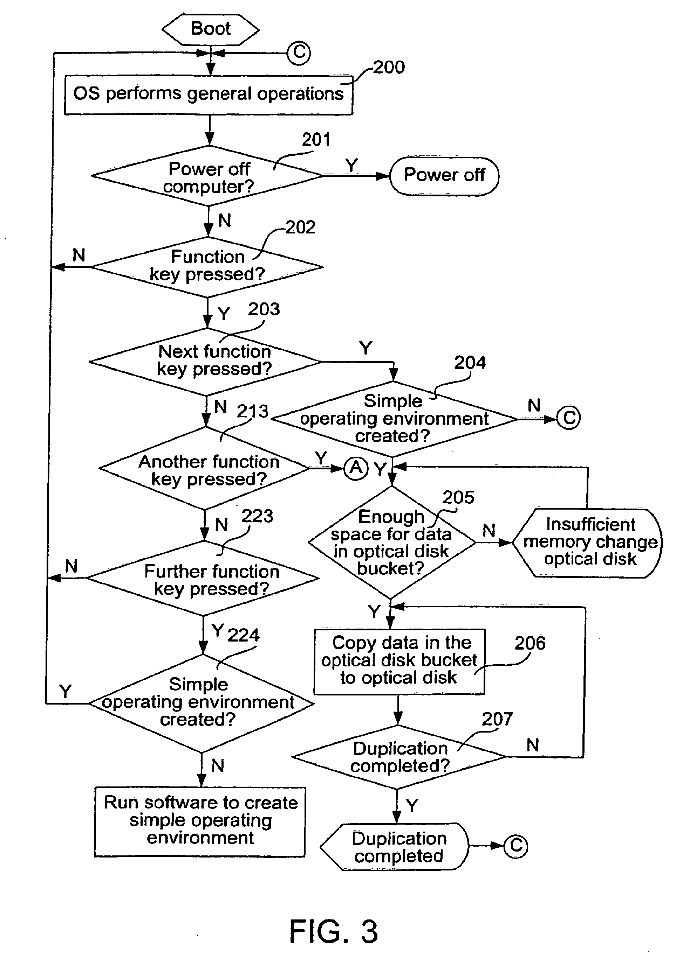

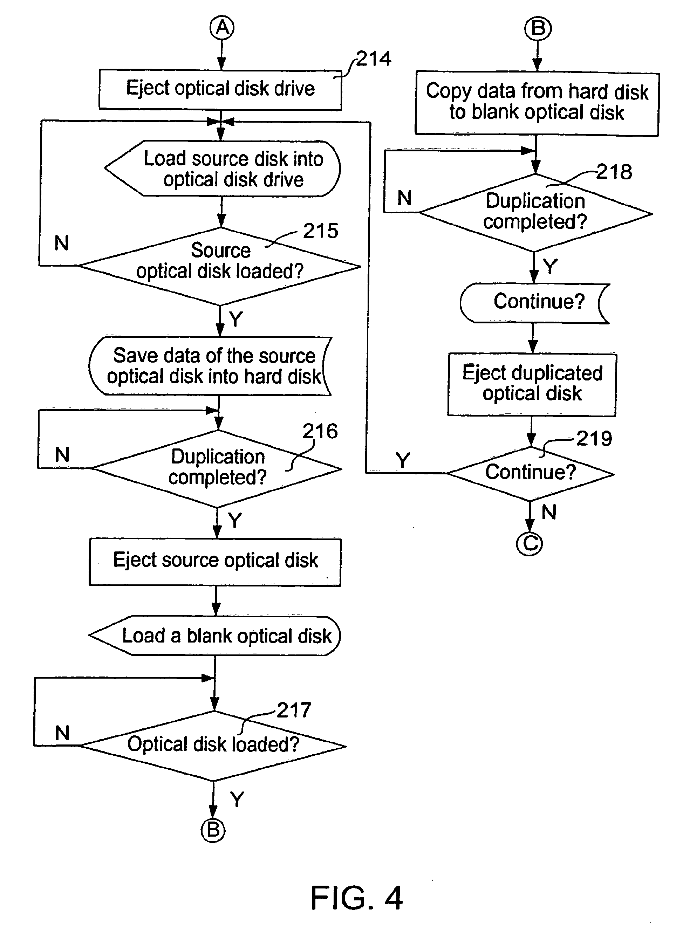

In this preferred embodiment, the central processing unit 11 will perform the following operations as shown in FIGS. 3 and 4 according to the signal triggered by pressing a function key 1611, 1612, 1613 on the optical disk burner 16 after the personal computer 1 is booted.
(200) The central processing unit 11 performs a general operation according to the operating system of the personal computer 1.
(201) Determine whether or not a user turns off the personal computer 1; if yes, perform a shutdown operation; if no, go to step (202).
(202) Determine whether or not a trigger signal sent from the control circuit 163 is received and different trigger signals indicate the situation of each function key 1611, 1612, 1613 being pressed; if yes, go to step (203); if no, return to step (200) to perform the general operation.
(203) Determine whether or not the trigger signal generated by pressing the optical disk burning function keys 1612 is received; if yes, go to step (204); if no, go to step (213) to carry out further decision.
(204) Determine whether or not the operating system of the personal computer 1 has created an "environment for duplicating files by a simple operation"; if yes, go to step (205); if no, return to step (200) to perform the general operation.
(205) Detect and determine whether or not there is remaining or sufficient space in the optical disk which is loaded into the optical disk burner 16 for accommodating the data waiting for duplication in the optical disk bucket shown on the screen of the monitor 17; if yes, go to step (206); if no, display a message "Insufficient memory. Please change the optical disk." and after the user has changed the optical disk, return to step (205) to detect and determine the remaining space of the optical disk.
(206) Turn on the optical disk burner 16, and duplicate the data in the optical disk bucket to the optical disk.
(207) Detect whether or not the optical disk burner 16 has completed the duplication; if yes, display the message "Duplication completed" and then return to step (200) and continue the general operation; if no, then return to step (206) to continue the duplicating operation.
(213) Determine whether or not a trigger signal generated by pressing the optical disk duplication function key 1613 is received; if yes, go to step (214); if no, go to step (223) to carry out further decision.
(214) Operate the optical disk burner 16 to push out the optical disk mechanism 1613, and display the message "Please load the source optical disk into the optical disk burner" and go to step (215).
(215) Detect and determine whether or not a source optical disk is loaded into the optical disk burner 16; if yes, copy the data of the source optical disk into a hard disk drive of the personal computer 1 and go to step (216); if no, display the message "Please load the source optical disk into the optical disk burner" to ask the user to load the source optical disk.
(216) Detect and determine whether or not the data of the source optical disk is copied into the hard disk drive; if yes, operate the optical disk burner 16 to push out the optical disk mechanism 164 loaded with the source optical disk, so that the user can remove the source optical disk and display the message "Please load a blank optical disk into the optical disk burner." to request users to load a blank optical disk into the optical disk mechanism and then go to step (217); if no, continue copying the data of the source optical disk to the hard disk drive.
(217) Detect and determine whether or not a blank optical disk is loaded into the optical disk burner 16; if yes, start the optical disk burner 16 to copy the data of the source optical disk duplicated into the hard disk drive to the blank optical disk, and go to step (218); if no; display the message "Please load a blank optical disk into the optical disk burner." to request users to load a blank optical disk.
(218) Detect and determine whether or not the data of the source optical disk is copied to the blank optical disk; if yes, display the message "Duplication completed. Do you want to continue duplicating?" and operate the optical disk burner 16 to push out the optical disk mechanism, so that a user can remove the duplicated optical disk and load another blank optical disk, and then go to step (219); if no, continue the operation of copying the data of the source optical disk to the blank optical disk.
(219) Determine whether or not to continue duplicating; if yes, go to step (215); if no; return to step (200) to perform the general operation.
(223) Determine whether or not a trigger signal generated by pressing one of the configuration function key 1611 is received; if yes, go to step (224); if no, return to step (200) to perform the general operation.
(224) Determine whether or not the operating system of the personal computer has created the "environment for duplicating files by a simple operation"; if yes, return to step (200) to perform the general operation; if no, request the operating system of the personal computer 1 to create the "environment for duplicating files by a simple operation" and generate an optical disk bucket icon on the screen of the monitor 17.

In another preferred embodiment of the present invention, after a user connects the optical disk burner 16 to a personal computer I and installs the driver program of the optical disk burner 16 in the personal computer 1, the operating system will automatically create an "environment for duplicating files by a simple operation" and generate a terminate and stay resident (TSR) optical disk .bucket icon at the uppermost level of the screen of the monitor for a user to place the desired file. Thus, in such preferred embodiment of the present invention, it is not necessary to build any configuration function key 1611 on the housing of the optical disk burner 16 at all. It only needs to have the optical disk burning function key 1612 and the optical disk duplicating function key 1613. If a user wants to copy the data waiting for duplication in the optical disk bucket to an optical disk loaded in the optical disk burner 16, the user can select to press the optical disk burning function key 1612 to trigger the control circuit 163 to generate a control signal to drive the corresponding software for copying the data waiting for duplication in the optical disk bucket to the optical disk. If a user wants to duplicate a source optical disk, the user can press the optical disk duplicating function key 1613 to trigger the control circuit 163 to drive the corresponding software for displaying the simple messages such as "Please load the source optical disk", "Please remove source optical disk and load blank optical disk." to guide a user to quickly and successfully complete the file duplicating operation according to the instructions.

In view of the description above, the press key operating type optical disk duplicating system of the present invention provides users a more user-friendly and convenient-to-use optical disk burner, so that a user just need to press the function key built on the optical disk burner to drive the optical disk burner to directly copy the files of a personal computer to an optical disk or guide the user to quickly and successfully complete the file duplicating operation according to the simplest and most user-friendly instructions through the personal computer. Therefore, the present invention not only can save the time and effort to learn the complicated procedure of the traditional duplicating program for those users who often need to back up important data on a personal computer or burn data into an optical disk, but also can complete the optical disk burning (copying PC files to an optical disk) or optical disk duplication correctly by the simplest method to drastically reduce unnecessary waste caused by wrong operations and effectively improve working efficiency so that the general public will have more confidence and fun using computers.

While the invention has been described by examples and in terms of preferred embodiments, it is to be understood that the invention is not limited thereto.

## Claims

1. A press key operating type optical disk duplicating system, which comprises a personal computer and an optical disk burner coupled to said personal computer for duplicating files stored in said personal computer to an optical disk loaded into said optical disk burner, said optical disk burner comprising at least two function keys and a control circuit, having at least two general purpose I/O ports coupled to said function keys respectively, **characterized in that:**
when one of said at least two function keys is pressed, said control circuit is activated to drive a software related to the optical disk burner to produce an optical disk bucket icon permanently resided on the display screen of the personal computer for saving the files going to be duplicated to said optical disk and, said optical disk bucket icon drives said software to display a message to guide a user for completing the operation of duplicating the files saved in said optical disk bucket icon to said optical disk through said optical disk burner, when the total volume of the files saved in the optical disk bucket icon equals to a maximum volume value or when the control circuit detects the other of said at least two function keys is pressed.

2. The press key operating type optical disk duplicating system of claim 1 further comprising a counter disposed at said optical disk bucket icon and at a position adjacent to said optical disk bucket for showing the total volume of the files saved in said optical disk bucket icon.

3. Method for operating a press key operating type optical disk duplicating system, which comprises a personal computer and an optical disk burner coupled to said personal computer for duplicating files stored in said personal computer to an optical disk loaded into said optical disk burner, said optical disk burner comprising at least two function keys including an optical disk duplication function key and an optical disk burning function key and a control circuit, having at least two general purpose I/O ports coupled to said function keys respectively, **characterized in that** it comprises following steps:
step 200: The central processing unit of the personal computer performs a general operation according to the operating system of the personal computer
step 201: Determining whether or not a user turns off the personal computer; if yes, perform a shutdown operation; if no, go to step 202
step 202: Determining whether or not a trigger signal sent from the control circuit of the optical disk burner is received and different trigger signals indicate the situation of each function key disposed on the optical disk burner being pressed; if yes, go to step 203; if no, return to step 200 to perform the general operation
step 203: Determining whether or not the trigger signal generated by pressing the optical disk burning function key is received; if yes, go to step 204; if no, go to step 213 to carry out further decision
step 204: Determining whether or not the operating system of the personal computer has created an "environment for duplicating files by a simple operation" by means of the software; if yes, go to step 205; if no, return to step 200 to perform the general operation
step 205: Detecting and determining whether or not there is remaining or sufficient space in the optical disk which is loaded into the optical disk burner for accommodating the data waiting for duplication in the optical disk bucket shown on the display screen; if yes, go to step 206; if no, display a message "Insufficient memory. Please change the optical disk." and after the user has changed the optical disk, return to step 205 to detect and determine the remaining space of the optical disk
step 206: Turning on the optical disk burner, and duplicating the data in the optical disk bucket to the optical disk
step 207: Detecting whether or not the optical disk burner has completed the duplication; if yes, display the message "Duplication completed" and then return to step 200 and continue the general operation; if no, then return to step 206 to continue the duplicating operation
step 213: Determining whether or not a trigger signal generated by pressing the optical disk duplication function key is received; if yes, go to step 214; if no, go to step 223 to carry out further decision.
step 214: Operating the optical disk burner to push out the optical disk mechanism, and display the message "Please load the source optical disk into the optical disk burner" and go to step 215
step 215 Detecting and determining whether or not a source optical disk is loaded into the optical disk burner; if yes, copy the data of the source optical disk into a hard disk drive of the personal computer and go to step 216; if no, display the message "Please load the source optical disk into the optical disk burner" to ask the user to load the source optical disk
step 216: Detecting and determining whether or not the data of the source optical disk is copied into the hard disk drive; if yes, operate the optical disk burner to push out the optical disk mechanism loaded with the source optical disk, so that the user can remove the source optical disk and display the message "Please load a blank optical disk into the optical disk burner." to request users to load a blank optical disk into the optical disk mechanism and then go to step 217; if no, continue copying the data of the source optical disk to the hard disk drive
step 217: Detecting and determining whether or not a blank optical disk is loaded into the optical disk burner; if yes, start the optical disk burner to copy the data of the source optical disk duplicated into the hard disk drive to the blank optical disk, and go to step 218; if no, display the message "Please load a blank optical disk into the optical disk burner." to request users to load a blank optical disk
step 218 Detecting and determining whether or not the data of the source optical disk is copied to the blank optical disk; if yes, display the message "Duplication completed Do you want to continue duplicating?" and operate the optical disk burner to push out the optical disk mechanism, so that a user can remove the duplicated optical disk and load another blank optical disk, and then go to step 219; if no, continue the operation of copying the data of the source optical disk to the blank optical disk.
step 219: Determining whether or not to continue duplicating; if yes, go to step 215; if no; return to step 200 to perform the general operation
step 223 Determining whether or not a trigger signal generated by pressing one of the configuration function key disposed on the optical disk burner is received; if yes, go to step 224; if no, return to step 200 to perform the general operation; and
step 224: Determining whether or not the operating system of the personal computer has created the "environment for duplicating files by a simple operation" by means of the software; if yes, return to step 200 to perform the general operation; if no, request the operating system of the personal computer to create the "environment for duplicating files by a simple operation" and generate an optical disk bucket icon on the display screen.

## Patentansprüche

1. Durch Tastendruck betätigbares Kopiersystem für optische Speicherplatten, das einen Arbeitsplatzrechner (PC) und einen an diesen angeschlossenen Brenner für derartige Speicherplatten aufweist, um im PC gespeicherte Dateien auf eine in den Brenner eingelegte Speicherplatte zu übertragen bzw. in diese zu brennen, wobei der Brenner mindestens zwei Funktionstasten und eine Steuerschaltung aufweist und an die Funktionstasten jeweils einer von mindestens zwei Allzweck-Ein-/Ausgabe-Anschlüssen (E/A-Ports) gelegt ist, **dadurch gekennzeichnet, dass:**
beim Drücken einer der mindestens zwei Funktionstasten die Steuerschaltung aktiviert wird, um dem Brenner zugeordnete Software zu veranlassen, ein Bucket-Icon zu erzeugen, das permanent auf dem PC-Bildschirm erscheint und mit dem die auf die Speicherplatte zu kopierenden Dateien sich sichern lassen, wobei das Bucket-Icon die Software veranlasst, eine Meldung auszugeben, die, wenn das Gesamtvolumen der im Bucket-Icon gesicherten Dateien gleich einem Maximum ist oder die Steuerschaltung ermittelt, dass eine andere der mindestens zwei Tasten gedrückt wurde, einen Nutzer bis zum Abschluss des Kopierens der im Bucket-Icon gesicherten Dateien auf die Speicherplatte mittels des Brenners führt.

2. Durch Tastendruck betätigbares Kopiersystem nach Anspruch 1 weiterhin mit einem Zähler, der am und an einer Stelle neben dem Bucket-Icon angeordnet ist und das Gesamtvolumen der im Bucket-Icon gesicherten Dateien angibt.

3. Verfahren zum Betätigen eines tastenbetätigten Kopiersystems für optische Speicherplatten mit einem PC und einem an den PC angeschlossenen Brenner für derartige Speicherplatten, um im PC gespeicherte Dateien auf eine in den Brenner eingelegte optische Speicherplatte zu brennen, wobei der Brenner mindestens zwei Funktionstasten, von denen eine Speicherplatten-Kopier- und eine eine Speicherplatten-Brennfunktion ausführt, und eine Steuerschaltung mit mindestens zwei Allzweck-E/A-Anschlüssen aufweist, die jeweils mit den Funktionstasten verschaltet sind, **gekennzeichnet durch** folgende Schritte:
Schritt 200: Der Zentralprozessor des PCs führt eine allgemeine Funktion entsprechend dem Betriebssystem des PCs aus.
Schritt 201: Bestimmen, ob ein Nutzer den PC abschaltet. Falls JA, Herunterfahren des PCs; falls NEIN, zum Schritt 202 springen.
Schritt 202: Bestimmen, ob ein Triggersignal aus der Steuerschaltung des Brenners empfangen wird, wobei unterschiedliche Triggersignale für jede Funktionstaste des Brenners anzeigen, ob diese jeweils gedrückt sind. Falls JA, zum Schritt 203 springen; falls NEIN, zum Schritt 200 zurückkehren, um die allgemeine Funktion auszuführen.
Schritt 203: Bestimmen, ob das **durch** Drücken der Brenner-Funktionstaste erzeugte Triggersignal empfangen wird. Falls JA, zum Schritt 204 springen; falls NEIN, zum Schritt 213 springen, um weitere Entscheidung zu treffen.
Schritt 204: Bestimmen, ob das Betriebssystem des PCs softwaremäßig eine "Umgebung zum Kopieren von Dateien **durch** einen einfachen Vorgang" erzeugt hat. Falls JA, zum Schritt 205 springen; falls NEIN, zum Schritt 200 zurückkehren, um die allgemeine Funktion auszuführen.
Schritt 205: Erfassen und bestimmen, ob auf der in den Brenner eingelegten Speicherplatte genug Platz vorliegt bzw. verbleibt, um die im auf dem Bildschirm dargestellten Bucket-Speicher auf das Kopieren wartenden Daten aufzunehmen. Falls JA, zum Schritt 206 springen; falls NEIN, eine Meldung "Nicht genug Speicherplatz. Speicherplatte wechseln." ausgeben und, nachdem der Nutzer die Speicherplatte ausgetauscht hat, zum Schritt 205 zurückkehren, um den auf ihr vorhandenen Speicherplatz zu bestimmen.
Schritt 206: Den Brenner einschalten und die Daten im Bucket-Speicher auf die Speicherplatte kopieren.
Schritt 207: Bestimmen, ob der Brenner den Kopiervorgang abgeschlossen hat. Falls JA, die Meldung "Kopiervorgang beendet." ausgeben und dann zum Schritt 200 zurückspringen; falls NEIN, zum Schritt 206 springen und den Kopiervorgang fortsetzen.
Schritt 213: Bestimmen, ob ein **durch** Drücken der Kopiertaste erzeugtes Triggersignal empfangen wird. Falls JA, zu Schritt 214 springen; falls NEIN, zum Schritt 223 springen, um weitere Entscheidung zu treffen.
Schritt 214: Die Plattenauswerfmechanik am Brenner betätigen, die Meldung "Quell-Platte einlegen" ausgeben und zum Schritt 215 springen.
Schritt 215: Erfassen und bestimmen, ob eine Quell-Platte in den Brenner eingelegt ist. Falls JA, die Daten der Quell-Platte auf die PC-Festplatte kopieren und zum Schritt 216 gehen; falls NEIN, die Meldung "Quell-Platte in den Brenner einlegen" ausgeben, um den Nutzer zum Einlegen der Quell-Platte aufzufordern.
Schritt 216: Erfassen und bestimmen, ob die Daten der Quell-Platte auf die Festplatte überspielt worden sind. Falls JA, die Auswerfmechanik des Brenners betätigen, so dass der Nutzer die Quell-Platte entnehmen kann, dann die Meldung "Leere Speicherplatte in den Brenner einlegen" ausgeben, um die Nutzer aufzufordern, eine leere Speicherplatte in den Brenner einzulegen, und schließlich zum Schritt 217 springen; falls NEIN, weiter Daten von der Quell-Platte auf die Festplatte überspielen.
Schritt 217: Erfassen und bestimmen, ob eine leere Speicherplatte in den Brenner eingelegt ist. Falls JA, den Brenner einschalten, um die von der Quell-Platte auf die Festplatte kopierten Daten auf die leere Speicherplatte zu überspielen, und zum Schritt 218 gehen; falls NEIN, die Meldung "Leere Speicherplatte in den Brenner einlegen." ausgeben, um die Nutzer aufzufordern, eine leere Speicherplatte einzulegen.
Schritt 218: Erfassen und bestimmen, ob die Daten der Quell-Platte auf die leere Speicherplatte kopiert worden sind. Falls JA, die Meldung "Kopiervorgang beendet. Möchten Sie weitere Dateien kopieren?" ausgeben, dann die Auswerfmechanik des Brenners betätigen, so dass ein Nutzer die beschriebene Speicherplatte entnehmen und eine neue Leerplatte einlegen kann, und schließlich zum Schritt 219 springen; falls NEIN, weiter die Daten der Quell-Platte auf die leere Speicherplatte überschreiben.
Schritt 219: Bestimmen, ob weiter kopiert werden soll. Falls JA, zum Schritt 215 springen; falls NEIN, zum Schritt 200 gehen, um den generellen Arbeitsvorgang auszuführen.
Schritt 223: Bestimmen, ob ein **durch** Drücken einer der Konfigurations-Funktionstasten des Brenners erzeugtes Triggersignal empfangen wird. Falls JA, zum Schritt 224 springen; falls NEIN, zum Schritt 200 springen, um den generellen Arbeitsvorgang auszuführen. und
Schritt 224: Bestimmen, ob das PC-Betriebssystem softwaremäßig die "Umgebung zum Kopieren von Dateien in einem einfachen Vorgang" erzeugt hat. Falls JA, zum Schritt 200 zurückkehren, um den allgemeinen Arbeitsvorgang auszuführen; falls NEIN, das PC-Betriebssystem auffordern, die "Umgebung zum Kopieren von Dateien in einem einfachen Vorgang" sowie auf dem Bildschirm ein Bucket-Icon zu erzeugen.

## Revendications

1. Système de duplication de disques optiques fonctionnant par appui sur une touche, qui comprend un ordinateur personnel et un graveur de disques optiques couplé audit ordinateur personnel pour dupliquer des fichiers stockés dans ledit ordinateur personnel sur un disque optique chargé dans ledit graveur de disques optiques, lequel graveur de disques optiques comprend au moins deux touches de fonction et un circuit de contrôle, comprenant au moins deux ports d'entrée-sortie généraux couplés auxdites touches de fonction respectivement, **caractérisé en ce que :**
quand l'une desdites au moins deux touches de fonction est enfoncée, ledit circuit de contrôle est activé pour faire fonctionner un logiciel associé au graveur de disques optiques afin de produire une icône de bac de disque optique résidant à demeure sur l'écran d'affichage de l'ordinateur personnel afin d'enregistrer les fichiers qui vont être copiés sur ledit disque optique, et ladite icône de bac de disque optique fait fonctionner ledit logiciel pour afficher un message guidant un utilisateur dans l'exécution de l'opération de duplication des fichiers dans ladite icône de bac de disque optique vers ledit disque optique à l'aide dudit graveur de disques optiques, quand le volume total des fichiers enregistrés dans l'icône de bac de disque optique est égal à une valeur de volume maximale ou quand le circuit de contrôle détecte que l'autre desdites au moins deux touches de fonction est pressée.

2. Système de duplication de disques optiques fonctionnant par appui sur une touche selon la revendication 1, comprenant en outre un compteur disposé dans ladite icône de bac de disque optique et dans une position adjacente audit bac de disque optique pour indiquer le volume total des fichiers enregistrés dans ladite icône de bac de disque optique.

3. Procédé d'utilisation d'un système de duplication de disques optiques fonctionnant par appui sur une touche, qui comprend un ordinateur personnel et un graveur de disques optiques couplé audit ordinateur personnel pour dupliquer des fichiers stockés dans ledit ordinateur personnel sur un disque optique chargé dans ledit graveur de disques optiques, lequel graveur de disques optiques comprend au moins deux touches de fonction et un circuit de contrôle, comprenant au moins deux ports d'entrée-sortie généraux couplés auxdites touches de fonction respectivement,
**caractérisé en ce qu'**il comprend les étapes suivantes :
étape 200 : l'unité centrale de l'ordinateur personnel exécute une opération générale selon le système d'exploitation de l'ordinateur personnel ;
étape 201 : détermination si un utilisateur éteint ou non l'ordinateur personnel ; si oui, exécution d'une opération d'arrêt, sinon passage à l'étape 202 ;
étape 202 : détermination si un signal de déclenchement envoyé par le circuit de contrôle du graveur de disques optiques est ou non reçu et si différents signaux de déclenchement indiquent la situation d'appui sur chaque touche de fonction disposée sur le graveur de disques optiques ; si oui, passage à l'étape 203 ; sinon, retour à l'étape 200 pour exécuter l'opération générale ;
étape 203 : détermination si le signal de déclenchement produit en appuyant sur la touche de fonction de gravure du disque optique est ou non reçu ; si oui, passage à l'étape 204 ; sinon, passage à l'étape 213 pour réaliser une autre décision ;
étape 204 : détermination si le système d'exploitation de l'ordinateur personnel a ou non créé un « environnement pour la duplication de fichiers par une opération simple » au moyen du logiciel ; si oui, passage à l'étape 205 ; sinon, retour à l'étape 200 pour exécuter l'opération générale ;
étape 205 : détection et détermination du fait qu'il y a ou non dans le disque optique chargé dans le graveur de disques optiques un espace restant ou suffisant pour recevoir les données en attente de duplication dans le bac de disque optique apparaissant sur l'écran d'affichage ; si oui, passage à l'étape 206 ; sinon, affichage d'un message « Mémoire insuffisante. Changez de disque optique. » et, après que l'utilisateur a changé de disque optique, retour à l'étape 205 pour détecter et déterminer l'espace restant du disque optique ;
étape 206 : démarrage du graveur de disques optiques et duplication des données du bac de disque optique sur le disque optique ;
étape 207 : détection du fait que le graveur de disques optiques a ou non terminé la duplication ; si oui, affichage du message « Duplication terminée » puis retour à l'étape 200 et poursuite de l'opération générale ; sinon, retour à l'étape 206 pour continuer l'opération de duplication ;
étape 213 : détermination si un signal de déclenchement produit en appuyant sur la touche de fonction de duplication du disque optique est ou non reçu ; si oui, passage à l'étape 214 ; sinon, passage à l'étape 223 pour exécuter une autre décision ;
étape 214 : actionnement du graveur de disques optiques pour éjecter le mécanisme de disque optique et affichage du message « Veuillez charger le disque optique source dans le graveur de disques optiques » et passage à l'étape 215 ;
étape 215 : détection et détermination du fait qu'un disque optique source est ou non chargé dans le graveur de disques optiques ; si oui, copie des données du disque optique source sur un disque dur de l'ordinateur personnel et passage à l'étape 216 ; sinon, affichage du message « Veuillez charger le disque optique source dans le graveur de disques optiques » pour demander à l'utilisateur de charger le disque optique source ;
étape 216 : détection et détermination du fait que les données du disque optique source sont ou non copiées sur le disque dur ; si oui, actionnement du graveur de disques optiques pour éjecter le mécanisme de disque optique chargé avec le disque optique source, afin que l'utilisateur puisse retirer le disque optique source, et affichage du message « Veuillez charger un disque optique vierge dans le graveur de disques optiques » pour demander à l'utilisateur de charger un disque optique vierge dans le mécanisme de disque optique puis passage à l'étape 217 ; sinon, poursuite de la copie des données du disque optique source sur le disque dur ;
étape 217 : détection et détermination du fait qu'un disque optique vierge est ou non chargé dans le graveur de disques optiques ; si oui, démarrage du graveur de disques optiques pour copier les données du disque optique source dupliquées dans le disque dur sur le disque optique vierge, et passage à l'étape 218 ; sinon, affichage du message « Veuillez charger un disque optique vierge dans le graveur de disques optiques » pour demander à l'utilisateur de charger un disque optique vierge ;
étape 218 : détection et détermination du fait que les données du disque optique source sont ou non copiées sur le disque optique vierge ; si oui, affichage du message « Duplication terminée. Voulez-vous continuer la duplication ? » et actionnement du graveur de disques optiques pour éjecter le mécanisme de disque optique afin qu'un utilisateur puisse retirer le disque optique dupliqué et charger un autre disque optique vierge, puis passage à l'étape 219 ; sinon, poursuite de l'opération de copie des données du disque optique source sur le disque optique vierge ;
étape 219 : décision de continuer ou non la duplication ; si oui, passage à l'étape 215 ; sinon, retour à l'étape 200 pour exécuter l'opération générale ;
étape 223 : détermination si un signal de déclenchement produit en appuyant sur l'une des touches de fonction de configuration disposées sur le graveur de disques optiques est ou non reçu ; si oui, passage à l'étape 224 ; sinon, retour à l'étape 200 pour exécuter l'opération générale ; et
étape 224 : détermination du fait que le système d'exploitation de l'ordinateur personnel a ou non créé « l'environnement pour la duplication de fichiers par une opération simple » au moyen du logiciel ; si oui, retour à l'étape 200 pour exécuter l'opération générale ; sinon, demande au système d'exploitation de l'ordinateur personnel de créer « l'environnement pour la duplication de fichiers par une opération simple » et génération d'une icône de bac de disque optique sur l'écran d'affichage.
